# EUROPEAN PATENT SPECIFICATION

(11) **EP 3 776 804 B1**
(45) Date of publication and mention of the grant of the patent: **11.05.2022**
(21) Application number: 19830083.2
(22) Date of filing: 03.07.2019
(51) Int. Cl.: H02J 9/00, H02H 3/353, H02H 5/10, H02H 3/34, H02J 3/00

(54) **DETECTION AND COMPENSATION OF POWER PHASE LOSS**
DETEKTION UND KOMPENSATION VON LEISTUNGSPHASENVERLUST
DÉTECTION ET COMPENSATION DE PERTE DE PHASE D'ALIMENTATION

(30) Priority: 05.07.2018 US 201862694249 P
(43) Date of publication of application: 17.02.2021
(73) Proprietor: Phasor Ltd, 4355801 Ra'anana (IL)
(72) Inventor: TAMIR, Oren, 4372619 Raanana (IL)
(74) Representative: Balder IP Law, S.L.
(86) International application number: PCT/IL2019/050740
(87) International publication number: WO 2020/008462

(56) References cited:
- EP-A1- 2 672 603
- WO-A1-2017/029654
- CN-A- 1 319 927
- CN-A- 101 651 346
- KR-B1- 100 896 236
- US-B2- 9 373 957
- HAQ SU et al.: "Automatic three phase load balancing system by using fast switching relay in three phase distribution system", 2018 1st International Conference on Power , Energy and Smart Grid (ICPESG, 9 April 2018 (2018-04-09), pages 1-6, XP033358951, DOI: 10.1109/ICPESG.2018.8384514

## Description

### FIELD OF THE INVENTION

The present invention generally relates to power grid operation and specifically to three-phase power supplies.

### BACKGROUND

Three-phase power is often supplied to a site of a residential or business consumer even when most or all devices at the site require only a single phase of the three phases. If there is a failure of one phase, three-phase devices are generally protected by three-phase relays which cut off all power to such devices. However, single phase devices may continue to operate if they are connected to operating phases. Devices that are connected to that phase that is lost become inoperative, even though the consumer continues to receive power from the other phases. The lost phase may cause inconvenience and economic loss.

CN101651346A, discloses a multi-phase power supply device and method, applied to the technical field of power supply. The method comprises the following steps: a power supply detection module in the multi-phase power supply device detects the power supply information of each phase power supply to loads in a multiphase power supply system; and when at least one phase power supply fails to supply a load, a failure-processing module selects a power supply without failures so as to supply the load corresponding to the power supply with a failure. Compared with the prior multi-phase power supply device which switches off a phase power supply failing to supply a load and starts a backup power supply, the multi-phase power supply device utilizes a power supply without failures to supply a load, improves the utilization rate of a power network, lessens the use of a backup power supply and decreases the cost and the energy consumption.

WO2017029654, discloses a three-phase compensation system, comprising an electric circuit configured to be connected with a three-phase power source configured to supply three phases and with consumers; the electric circuit further configured to compensate for one or two malfunctioning phases of the three phases by supplying current from one of the other functioning phases of the three phases thereby enabling power supply to the consumers in the absence of one or two of the three phases.

### SUMMARY

The present invention provides a system and methods for enabling any phase of a three phase power supply to provide backup power in the event that one or two of the other phases is lost.

In embodiments of the present invention, a system is provided having a sensing unit, which measures current and voltage levels of each phase of the three-phase power source; a switching unit having three primary relays and three backup relays; and a microcontroller, configured to receive measurements from the sensing unit, to determine from the measurements a lost phase and a less-loaded phase of the two remaining phases, and responsively to activate the switching unit to disconnect the lost phase and to connect the less loaded phase to provide backup power in place of the lost phase. The present invention provides a phase compensation circuit, for detecting and compensating for loss of a phase of a three-phase power source, comprising:
a sensing unit, comprising sensors configured to measure current and voltage levels of each phase of the three-phase power source;
a switching unit comprising three primary relays, each primary relay normally closed to connect a respective phase of the three-phase power source to a respective phase output load line, and three backup relays, each backup relay normally open and when closed forming a connection between two output load lines; and
a microcontroller, configured to receive measurements from the sensing unit, to determine from the measurements a lost phase and a backup phase, and responsively to activate the switching unit to disconnect the lost phase from its respective output load line and to connect the backup phase to the lost phase output load line to provide backup power in place of the lost phase
wherein determining the backup phase comprises comparing electric currents provided by each of two remaining phases and selecting the backup phase as the less-loaded phase.

Dependent claims 2 to 10 disclose optional features of the invention.

The present invention also relates to a method for detecting and compensating for loss of a phase of a three-phase power source, comprising:
providing a sensing unit configured to measure current and voltage levels of each phase of the three-phase power source;
providing a switching unit (32) having three primary relays, each primary relay normally closed to connect a respective phase of the three-phase power source to an output load line, and three backup relays, each backup relay normally open and when closed forming a connection between two output load lines; and providing a microcontroller, configured to receive measurements from the sensing unit, to determine from the measurements a lost phase and a remaining phase, and responsively to activate the switching unit to disconnect the lost phase and to connect the remaining phase to provide backup power in place of the lost phase, wherein determining the backup phase comprises comparing electric currents provided by each of two remaining phases and selecting the backup phase as the less-loaded phase.

### BRIEF DESCRIPTION OF DRAWINGS

In the following detailed description of various embodiments, reference is made to the following drawings that form a part thereof, and in which are shown by way of illustration specific embodiments by which the invention may be practiced, wherein:
**Fig. 1** is a schematic illustration of a three-phase electrical power system including a phase compensation circuit, in accordance with an embodiment of the present invention;
**Fig. 2** is a schematic illustration of a sensing unit of the phase compensation circuit, in accordance with an embodiment of the present invention;
**Fig. 3** is a schematic illustration of a switching unit of the phase compensation circuit, in accordance with an embodiment of the present invention;
**Fig. 4** is a schematic illustration of a direct current (DC) power unit of the phase compensation circuit, in accordance with an embodiment of the present invention;
**Figs. 5A** and **5B** are graphs of power waveforms of the a direct current (DC) power unit output, in accordance with an embodiment of the present invention; and
**Fig. 6** is a schematic illustration of an alternative three-phase electrical power system including a phase compensation circuit, in accordance with an embodiment of the present invention.
**Fig. 7** is a schematic illustration of an alternative three-phase electrical power system including a phase compensation circuit, in accordance with an embodiment of the present invention.

### DETAILED DESCRIPTION OF THE INVENTION

In the following detailed description of various embodiments, it is understood that other embodiments may be utilized and structural changes may be made without departing from the scope of the present invention.

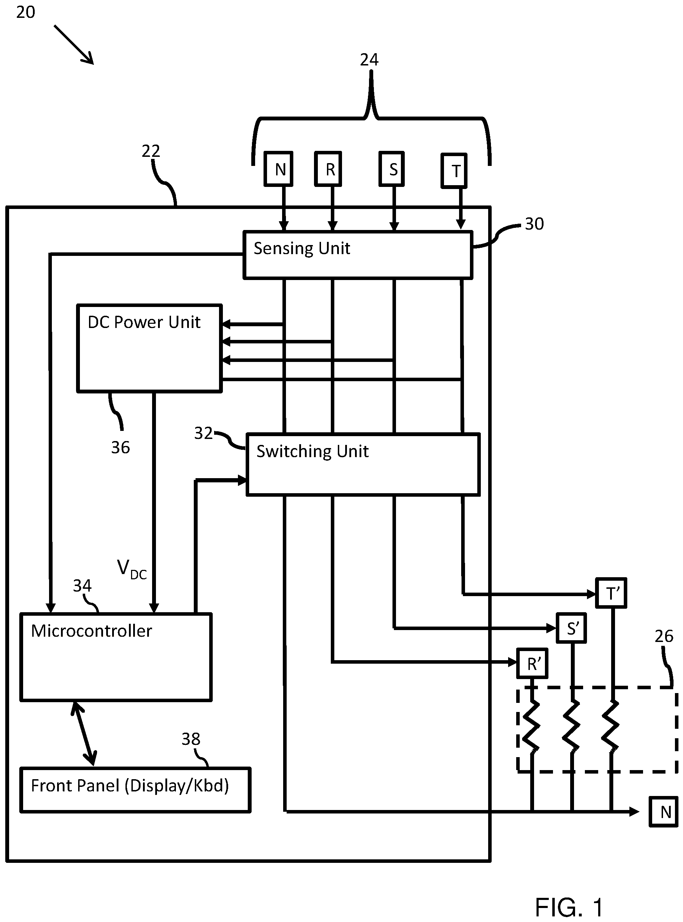

**Fig. 1** is a schematic illustration of a three-phase electrical power system **20** including a phase compensation circuit **22** for detecting and compensating for loss of a phase of a three-phase power source, in accordance with an embodiment of the present invention. The phase compensation receives, as input, three-phase input power **24,** typically with a four-wire configuration that includes a neutral line, as indicated in the figure. The phases of the three-phase power input are commonly labelled R, S, and T phases, respectively. The three-phase power input is typically provided by an electric generator, such as an on-site generator or a generator of a utility grid.

In embodiments of the present invention, the phase compensation circuit **22** provides multiple loads **26** with single phase power, that is, each individual load **26** is powered by one of the output phases, labelled as R', S', and T', respectively. All loads are connected to the common neutral line. In the event of a loss of one or two of the input phases (R, S, or T), the phase compensation circuit **22** switches a backup phase to operate in place of the lost phase or phases.

The phase compensation circuit **22** includes a sensing unit **30,** a switching unit **32,** and a microcontroller **34.** A direct current (DC) power unit 36 may provide DC power (indicated as V_{DC}) to the microcontroller. A user interface, such as a front panel **38,** which may include a display, a keyboard, and/or a speaker, may provide status indications as well as a means for a user to change operating configurations of the microcontroller **34,** as described further hereinbelow. The front panel may also provide remote connections, permitting remote user interaction with the phase compensation circuit **22.**

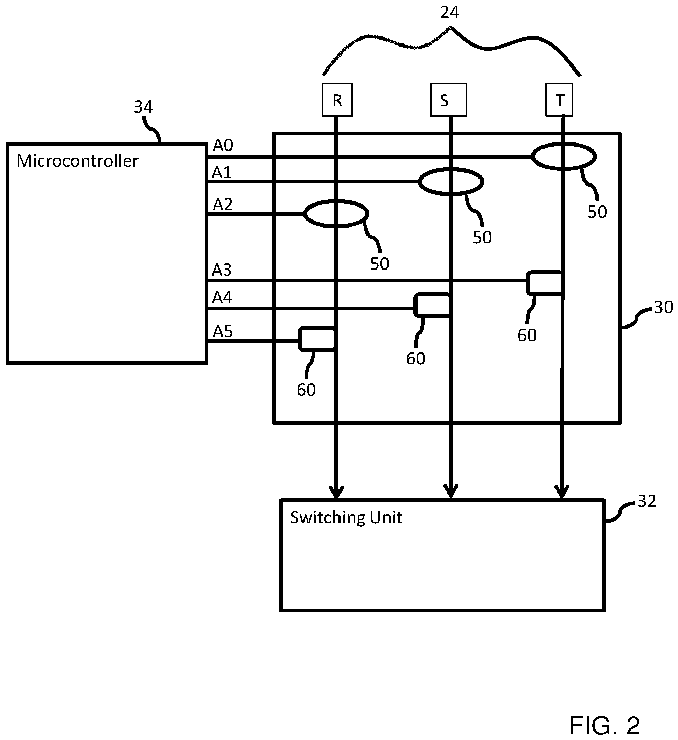

The sensing unit **30,** described in further detail hereinbelow with respect to **Fig. 2****,** measures electric current and voltage levels of each input phase, at the input of the phase compensation circuit **22,** and provides signals indicative of these levels to the microcontroller **24.** If there is a loss of one phase, for example due to a power surge on that phase elsewhere on the network, the voltage drop is sensed by the sensing unit **30,** which in turn provides the voltage level to the microcontroller **34.** The microcontroller **34** determines that a phase is lost and operates the switching unit **32** to decouple the bad (lost) phase. In parallel, the microcontroller **34** selects one of the remaining two operating phases to provide backup power to the loads **26** that were connected to the bad phase. The microcontroller **34** may determine which phase to select as the backup phase by comparing electric current levels of the remaining two phases (i.e., the phases that still provide power), and selecting the less loaded phase. Alternatively, the determination may be random, or based on a calculation of real power, that is, as the product of voltage and electric current.

After selecting a phase for providing backup power, the microcontroller **34** operates the switching unit **32** to connect the selected backup phase as a substitute for the lost phase. The microcontroller may also compare the electric current and/or power use of the selected backup phase to a preset safety level and connect the selected phase as backup only if the preset level is not surpassed. Preset safety levels for the phases may be set by a user by means of the front panel **38.**

Upon determining that a phase is lost, the microcontroller **34** may provide a visual and/or audio user alert at the front panel **38.** In addition, the microcontroller **34** may visually display an indication of the substitution of the selected backup phase for the lost phase, as well as providing additional status information, such as the power consumption and the margin between the power consumption and the preset safety level.

The microcontroller **34** may be any processing system including internal or external memory and digital outputs for driving the switching unit. Typically the microcontroller also includes analog-to-digital (A/D) inputs for receiving the signals of the sensing unit **30.** A typical microcontroller may be the ATmega 328P-AU processor from Atmel^{®}.

**Fig. 2** is a schematic illustration showing details of the sensing unit **30,** in accordance with an embodiment of the present invention. The sensing unit **30** includes three current sensors **50,** each configured to measure current of one input phase of the three-phase input power. The sensing unit **30** also includes three voltage sensors **60,** each configured to measure the voltage of one input phase of the three-phase input power. In one embodiment, the current and voltage sensors provide analog signals to analog-to-digital (A/D) inputs of the microcontroller **34,** indicated as A0-A5. An exemplary current sensor may be a Nuvotem Talema current transformer. An exemplary voltage sensor may be a ZMPT101B Ultra-micro voltage transformer, from Nanjing Zeming Electronics Co.

Alternatively, either or both types of sensors may include A/D converters, sampling the respective currents and voltages and providing digitals signals to the microcontroller **34.** The three phases, respectively R, S, and T, are conveyed to the switching unit **32** from the sensing unit.

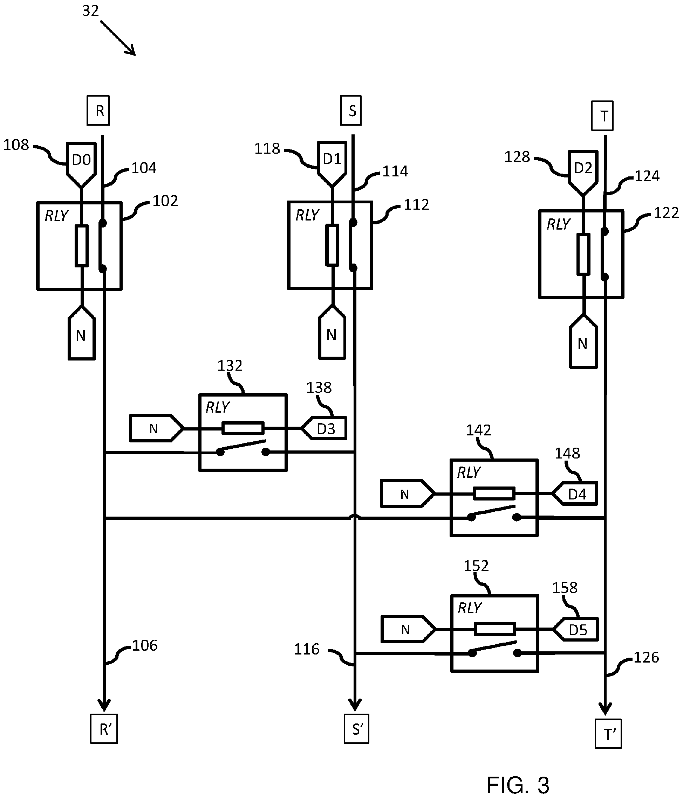

**Fig. 3** is a schematic illustration showing details of the switching unit **32,** in accordance with an embodiment of the present invention. The switching unit **32** includes three primary relays **102, 112,** and **122,** each primary relay normally closed to connect a respective phase of the three-phase power source to an output load line. That is, for example, relay **102** connects input line **104,** carrying phase R, to output line **106;** relay **112** connects input line **114,** carrying phase S, to output line **116;** and relay **122** connects input line **124,** carrying phase T, to output line **126.** Each primary relay also includes one or more control input, indicated as respective inputs **108, 118,** and **128.** Control inputs are typically received from digital outputs of the microcontroller **34.** The primary function of each control input is to cause its corresponding relay to open if the respective phase is lost, that is, if the microcontroller determines that the given phase is no longer providing a sufficient voltage.

The switching unit **32** also includes three backup relays **132, 142,** and **152,** each backup relay normally open. Backup relay **132,** when closed, connects output line **106** of phase R with output line **116** of phase S. Backup relay **142,** when closed, connects output line **116** of phase S with output line **126** of phase T. Backup relay **152,** when closed, connects output line **126** of phase T with output line **106** of phase R.

When a backup phase is needed to compensate for a lost phase, the microcontroller **34** opens the primary relay of the lost phase and then closes the backup relay connecting between the output line of the lost phase the output line of the selected backup phase. For example, if phase R is lost, the microcontroller will open relay **102** to disconnect phase R from the output line **106** (R') and will close either relay **132** or relay **142** to connect one of either phase S or phase T to the output line **106.** As described above, the microcontroller may determine which of the operating phases to connect to the output line of the lost phase based on which operating phase is less loaded, that is, based on which operating phase has greater spare capacity.

In some embodiments, the relays may be latching relays, such as the G9TA-K1ATH General Purpose Relay from Omron Corporation. Such relays typically require that an extra control line be provided to each relay (not shown) to reset the relays to a known state when operation begins.

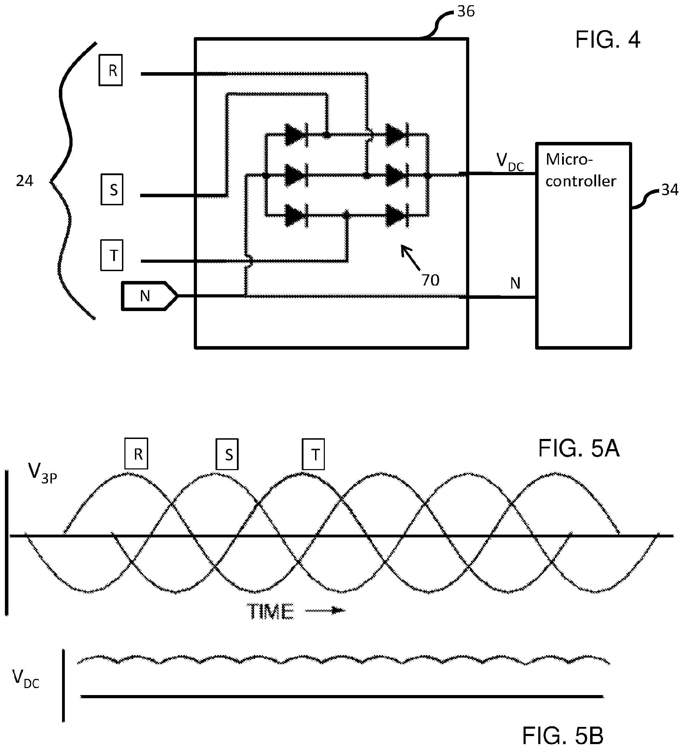

**Fig. 4** is a schematic illustration of the DC power unit **36,** in accordance with an embodiment of the present invention. The power unit **36** receives the phases and neutral line of the three-phase input power **24** and rectifies the power to generate a DC voltage V_{DC} that is provided to power the microcontroller **34.** The rectifying circuit may include a three-phase diode bridge **70** or other known passive or active circuits for current rectification.

**Figs. 5A** and **5B** are graphs of power waveforms, **Fig. 5A** showing the three input phases, R, S, and T, respectively, and **5B** showing a rectified DC wave generated by the DC power unit **36,** in accordance with an embodiment of the present invention. If one phase drops, the others will still compensate to provide a rectified DC wave for the microcontroller.

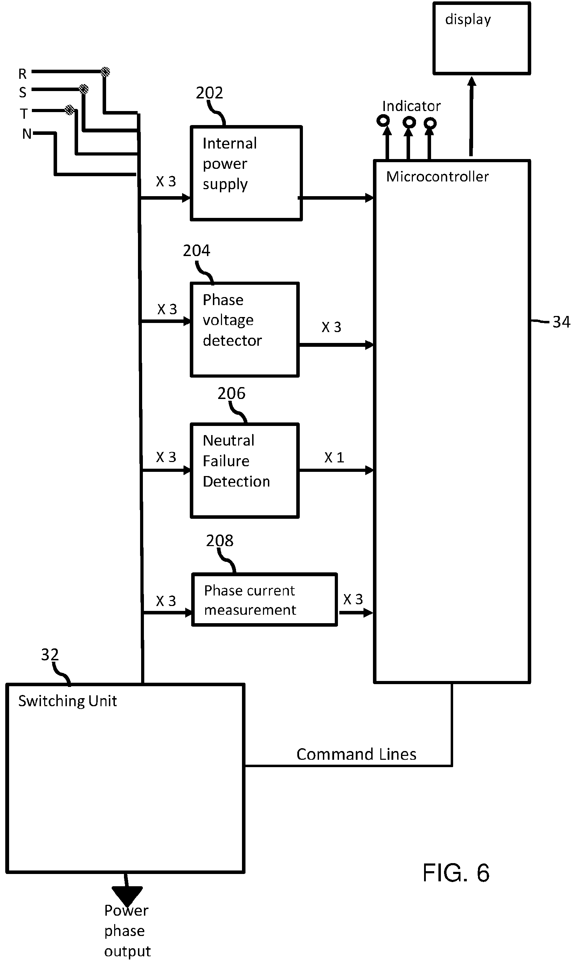

**Fig. 6** is a schematic illustration of an alternative three-phase electrical power system including a phase compensation circuit, in accordance with an embodiment of the present invention. As indicated, the microcontroller **34** outputs control lines to control the relays of switching unit **32.** The microcontroller may be configured to receive more inputs than indicated above with respect to **Fig. 2****.** As shown in **Fig. 6****,** the microcontroller receives output of a power supply **202** as described above and of phase voltage measurements **204,** which indicate whether a phase is lost. The microcontroller may also receive output of a neutral failure detector **206,** which may be applied to a determination that all relays of switching unit **32** should be opened, to prevent damage due to a lost neutral. Incase neutral failure if the neutral line is floating, the 3-phase the controller switched off the phases. Also, the microcontroller may receive output of phase current measurements **208.** If any currents of backup phases are above preset values for each phase, then the phase with two high a current is not used as a backup in the event of a second phase falling.

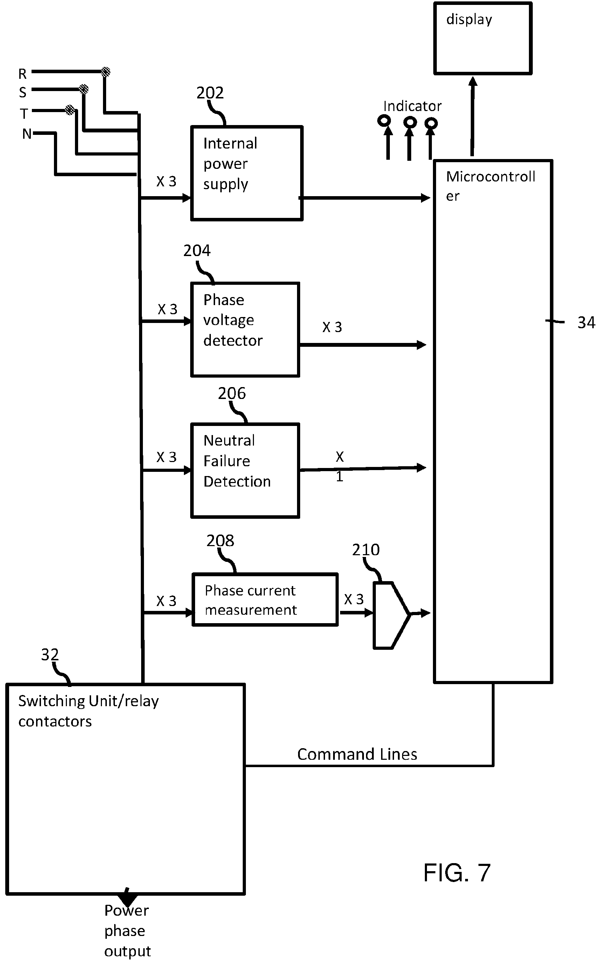

**Fig.** 7 is a schematic illustration of an alternative three-phase electrical power system including a phase compensation circuit, in accordance with an embodiment of the present invention. As indicated, the microcontroller **34** outputs control lines to control the relays of switching unit **32.** The microcontroller may be configured to receive more inputs than indicated above with respect to **Fig. 2****.** As shown in **Fig.** 7, the microcontroller receives output of a power supply **202** as described above and of phase voltage measurements **204,** which indicate whether a phase is lost. The microcontroller may also receive output of a neutral failure detector **206,** which may be applied to a determination that all relays of switching unit **32** should be opened, to prevent damage due to a lost neutral. Also, the microcontroller may receive output of phase current measurements **208** via digital to analog converter 210. If any currents of backup phases are above preset values for each phase, then the phase with two high a current is not used as a backup in the event of a second phase falling.

The system of the present invention may be integrated for example in houses, ships, airplanes, etc. or in any system receiving a three-phase power source. It will be appreciated that the system of the present invention may be connected to any three-phase power source such as an electric company, a three-phase generator, or any other three-phase power source.

It will be appreciated that in cases in which one or two of the three phases malfunction, the loads may require more power than the working phase(s) can supply. In such situations, a three-phase circuit breaker will typically break the electrical circuit due to an overload. The alert at the front panel may notify a user of a pending overload before the circuit breaker is activated, so that the user may disconnect electric appliances, enabling the working phase(s) to supply the user's needs.

The microcontroller of the phase compensation circuit may be a processor, meaning any one or more microprocessors, central processing units (CPUs), computing devices, microcontrollers, digital signal processors, FPGA or like devices. Data storage media, or computer-readable media, may refer to any medium that participates in providing data (e.g., instructions) that may be read by a processor. Such media may take many forms, including but not limited to, non-volatile media, volatile media, and transmission media. Formats described for storing data may include other formats, including tables, relational databases, object-based models and/or distributed databases. In addition, the data may be stored locally or remotely from a device which accesses the data. Software may be tangibly embodied in an information carrier, such as a machine-readable storage device or in a propagated signal, for execution by, or to control the operation of, data processing apparatus, such as a programmable processor or computer, or deployed to be executed on multiple computers at one site or distributed across multiple sites. Method steps associated with the system and process can be rearranged and/or one or more such steps can be omitted to achieve the same, or similar, results to those described herein. It is to be understood that the embodiments described hereinabove are cited by way of example, and that the present invention is not limited to what has been particularly shown and described hereinabove. Rather, the scope of the present invention includes variations and modifications thereof which would occur to persons skilled in the art upon reading the foregoing description and which are not disclosed in the prior art. Changes and modifications, which do not depart from the teachings of the present invention, will be evident to those skilled in the art. Such changes and modifications are within the purview of the present invention and the appended claims.

## Claims

1. A phase compensation circuit (20), for detecting and compensating for loss of a phase of a three-phase power source, comprising:
a sensing unit(30), comprising sensors configured to measure current and voltage levels of each phase of the three-phase power source (24);
a switching unit (32) comprising three primary relays (102,112,122), each primary relay normally closed to connect a respective phase of the three-phase power source to a respective phase output load line, and three backup relays, each backup relay normally open and when closed forming a connection between two output load lines; and
a microcontroller (34), configured to receive measurements from the sensing unit, to determine from the measurements a lost phase and a backup phase, and responsively to activate the switching unit to disconnect the lost phase from its respective output load line and to connect the backup phase to the lost phase output load line to provide backup power in place of the lost phase;
wherein determining the backup phase comprises comparing electric currents provided by each of two remaining phases and selecting the backup phase as the less-loaded phase.

2. The phase compensation circuit of claim 1, wherein the microcontroller (34) is configured to activate the switching unit (32) by opening a primary relay to disconnect the lost phase from a load, and by closing a backup relay to connect the remaining phase to the load.

3. The phase compensation circuit of claim 1, further comprising a direct current (DC) (36) power unit configured to convert the three-phase power source to DC power to provide power to the microcontroller.

4. The phase compensation circuit of claim 1, wherein determining the backup phase comprises comparing an electric current of a remaining phase with a preset electric current level and selecting the remaining phase as the backup phase only when the electric current of the remain phase is less than the preset electric current level.

5. The phase compensation circuit of claim 1, wherein determining the backup phase comprises comparing real power provided by each of two remaining phases and selecting the backup phase as the less-loaded phase.

6. The phase compensation circuit of claim 1, wherein determining the backup phase comprises comparing real power of a remaining phase with a preset real power level and selecting the remaining phase as the backup phase only when the real power of the remain phase is less than the preset real power level.

7. The phase compensation circuit of claim 5, wherein the microcontroller (34) is further configured to receive the preset level from a front panel.

8. The phase compensation circuit of claim 1, comprising a front panel, wherein the microcontroller (34) is further configured to provide a visual and/or audio user alert at the front panel as an indication of the lost phase.

9. The phase compensation circuit of claim 1, wherein the microcontroller(34) is further configured to provide at the front panel one or more of an indication of the substitution of the backup phase, a power consumption and a margin between the power consumption and a preset maximum/safety level.

10. The phase compensation circuit of claim further comprising a neutral failure detector (206) to prevent damage due to a lost neutral, in case of neutral failure detection the microcontroller switch off the phases.

11. A method for detecting and compensating for loss of a phase of a three-phase power source, comprising:
providing a sensing unit (30) configured to measure current and voltage levels of each phase of the three-phase power source;
providing a switching unit (32) having three primary relays, each primary relay normally closed to connect a respective phase of the three-phase power source to an output load line, and three backup relays, each backup relay normally open and when closed forming a connection between two output load lines; and
providing a microcontroller (34), configured to receive measurements from the sensing unit, to determine from the measurements a lost phase and a remaining phase, and responsively to activate the switching unit to disconnect the lost phase and to connect the remaining phase to provide backup power in place of the lost phase
wherein determining the backup phase comprises comparing electric currents provided by each of two remaining phases and selecting the backup phase as the less-loaded phase.

## Patentansprüche

1. Phasenkompensationsschaltkreis (20) zum Detektieren und Kompensieren eines Verlusts einer Phase einer dreihpasigen Energiequelle, welcher Folgendes umfasst:
eine Erfassungseinheit (30), die Sensoren umfasst, die zum Messen von Strom- und Spannungspegeln jeder Phase der dreihpasigen Energiequelle (24) ausgebildet sind;
eine Schalteinheit (32) umfassend drei Primärrelais (102, 112, 122), wobei jedes Primärrelais normalerweise geschlossen ist, um eine jeweilige Phase der dreihpasigen Energiequelle mit einer jeweiligen Phasenausgabelastleitung zu verbinden, und umfassend drei Absicherungsrelais, wobei jedes Absicherungsrelais normalerweise offen ist und, wenn geschlossen, eine Verbindung zwischen zwei Ausgabelastleitungen bildet; und
einen Mikrocontroller (34), der dazu ausgebildet ist, Messungen von der Erfassungseinheit zu empfangen, aus den Messungen eine verlorene Phase und eine Absicherungsphase zu bestimmen, und als Reaktion die Schalteinheit zum Trennen der verlorenen Phase von ihrer jeweiligen Ausgabelastleitung und zum Verbinden der Absicherungsphase mit der Ausgabelastleitung der verlorenen Phase zu aktivieren, um eine Absicherungsleistung anstelle der verlorenen Phase bereitzustellen;
wobei das Bestimmen der Absicherungsphase ein Vergleichen elektrischer Ströme, die durch jede von zwei verbleibenden Phasen bereitgestellt werden, und ein Auswählen der Absicherungsphase als die weniger belastete Phase umfasst.

2. Phasenkompensationsschaltkreis nach Anspruch 1, wobei der Mikrocontroller (34) dazu ausgebildet ist, die Schalteinheit (32) durch Öffnen eines Primärrelais, um die verlorene Phase von einer Last zu trennen, und durch Schließen eines Absicherungsrelais, um die verbleibende Phase mit der Last zu verbinden, zu aktivieren.

3. Phasenkompensationsschaltkreis nach Anspruch 1, der ferner eine Gleichstrom(DC)-Einheit (36) umfasst, die zum Umwandeln der dreihpasigen Energiequelle in eine DC-Leistung ausgebildet ist, um Leistung an den Mikrocontroller zu liefern.

4. Phasenkompensationsschaltkreis nach Anspruch 1, wobei das Bestimmen der Absicherungsphase ein Vergleichen eines elektrischen Stroms einer verbleibenden Phase mit einem voreingestellten elektrischen Strompegel und ein Auswählen der verbleibenden Phase als die Absicherungsphase umfasst, nur wenn der elektrische Strom der verbleibenden Phase geringer als der voreingestellte elektrische Strompegel ist.

5. Phasenkompensationsschaltkreis nach Anspruch 1, wobei das Bestimmen der Absicherungsphase ein Vergleichen einer Wirkleitung, die durch jede von zwei verbleibenden Phasen bereitgestellt wird, und ein Auswählen der Absicherungsphase als die weniger belastete Phase umfasst.

6. Phasenkompensationsschaltkreis nach Anspruch 1, wobei das Bestimmen der Absicherungsphase ein Vergleichen einer Wirkleistung einer verbleibenden Phase mit einem voreingestellten Wirkleistungspegel und ein Auswählen der verbleibenden Phase als die Absicherungsphase umfasst, nur wenn die Wirkleistung der verbleibenden Phase geringer als der voreingestellte Wirkleistungspegel ist.

7. Phasenkompensationsschaltkreis nach Anspruch 5, wobei der Mikrocontroller (34) ferner zum Empfangen des voreingestellten Pegels von einem Bedienfeld ausgebildet ist.

8. Phasenkompensationsschaltkreis nach Anspruch 1, der ein Bedienfeld umfasst, wobei der Mikrocontroller (34) ferner zum Bereitstellen eines visuellen und/oder akustischen Benutzeralarms an dem Bedienfeld als eine Indikation der verlorenen Phase ausgebildet ist.

9. Phasenkompensationsschaltkreis nach Anspruch 1, wobei der Mikrocontroller (34) ferner zum Bereitstellen einer Indikation der Substitution der Absicherungsphase, eines Leistungsverbrauchs und/oder einer Spanne zwischen dem Leistungsverbrauch und einem voreingestellten Maximal-/Sicherheitspegel an dem Bedienfeld ausgebildet ist.

10. Phasenkompensationsschaltkreis nach Anspruch, der ferner einen Neutralleiterfehlerdetektor (206) zum Verhindern eines Schadens aufgrund eines verlorenen Neutralleiters umfasst, wobei der Mikrocontroller im Fall einer Neutralleiterfehlerdetektion die Phasen abschaltet.

11. Verfahren zum Detektieren und Kompensieren eines Verlusts einer Phase einer dreihpasigen Energiequelle, welches Folgendes umfasst:
Bereitstellen einer Erfassungseinheit (30), die zum Messen von Strom- und Spannungspegeln jeder Phase der dreihpasigen Energiequelle ausgebildet ist;
Bereitstellen einer Schalteinheit (32) aufweisend drei Primärrelais, wobei jedes Primärrelais zum Verbinden einer jeweiligen Phase der dreihpasigen Energiequelle mit einer Ausgabelastleitung normalerweise geschlossen ist, und drei Absicherungsrelais, wobei jedes Absicherungsrelais normalerweise offen ist und, wenn geschlossen, eine Verbindung zwischen zwei Ausgabelastleitungen bildet; und
Bereitstellen eines Mikrocontrollers (34), der dazu ausgebildet ist, Messungen von der Erfassungseinheit zu empfangen, aus den Messungen eine verlorene Phase und eine Absicherungsphase zu bestimmen, und als Reaktion die Schalteinheit zum Trennen der verlorenen Phase von ihrer jeweiligen Ausgabelastleitung und zum Verbinden der Absicherungsphase mit der Ausgabelastleitung der verlorenen Phase zu aktivieren, um eine Absicherungsleistung anstelle der verlorenen Phase bereitzustellen;
wobei das Bestimmen der Absicherungsphase ein Vergleichen elektrischer Ströme, die durch jede von zwei verbleibenden Phasen bereitgestellt werden, und ein Auswählen der Absicherungsphase als die weniger belastete Phase umfasst.

## Revendications

1. Circuit de compensation de phase (20), pour détecter et compenser la perte d'une phase d'un bloc d'alimentation triphasé, comprenant :
une unité de détection (30), comprenant des capteurs configurés pour mesurer les niveaux de courant et de tension de chaque phase du bloc d'alimentation triphasé (24) ;
une unité de commutation (32) comprenant trois relais primaires (102, 112, 122), chaque relais primaire étant normalement fermé pour connecter une phase respective du bloc d'alimentation triphasé à une ligne de charge de sortie de phase respective, et trois relais de secours, chaque relais de secours étant normalement ouvert et, lorsqu'il est fermé, formant une connexion entre deux lignes de charge de sortie ; et
un microcontrôleur (34), configuré pour recevoir des mesures provenant de l'unité de détection, pour déterminer, à partir des mesures, une phase perdue et une phase de secours, et en réponse, pour activer l'unité de commutation pour déconnecter la phase perdue de sa ligne de charge de sortie respective et pour connecter la phase de secours à la ligne de charge de sortie de phase perdue pour fournir une alimentation de secours à la place de la phase perdue ;
dans lequel la détermination de la phase de secours comprend la comparaison des courants électriques fournis par chacune des deux phases restantes et la sélection de la phase de secours en tant que phase moins chargée.

2. Circuit de compensation de phase selon la revendication 1, dans lequel le microcontrôleur (34) est configuré pour activer l'unité de commutation (32) en ouvrant un relais primaire pour déconnecter la phase perdue d'avec une charge, et en fermant un relais de secours pour connecter la phase restante à la charge.

3. Circuit de compensation de phase selon la revendication 1, comprenant en outre un bloc d'alimentation en courant continu (DC) (36) configuré pour convertir le bloc d'alimentation triphasé en alimentation DC pour fournir une alimentation au microcontrôleur.

4. Circuit de compensation de phase selon la revendication 1, dans lequel la détermination de la phase de secours comprend la comparaison du courant électrique d'une phase restante avec un niveau de courant électrique préétabli et la sélection de la phase restante en tant que phase de secours uniquement quand le courant électrique de la phase restante est inférieur au niveau de courant électrique préétabli.

5. Circuit de compensation de phase selon la revendication 1, dans lequel la détermination de la phase de secours comprend la comparaison de la puissance active fournie par chacune des deux phases restantes et la sélection de la phase de secours en tant que phase moins chargée.

6. Circuit de compensation de phase selon la revendication 1, dans lequel la détermination de la phase de secours comprend la comparaison de la puissance active d'une phase restante avec un niveau de puissance active préétablie et la sélection de la phase restante en tant que phase de secours uniquement quand la puissance active de la phase restante est inférieure au niveau de puissance active préétabli.

7. Circuit de compensation de phase selon la revendication 5, dans lequel le microcontrôleur (34) est en outre configuré pour recevoir le niveau présélectionné à partir d'un panneau avant.

8. Circuit de compensation de phase selon la revendication 1, comprenant un panneau avant, dans lequel le microcontrôleur (34) est en outre configuré pour délivrer une alerte visuelle et/ou acoustique à l'utilisateur au niveau du panneau avant en tant qu'indication de la phase perdue.

9. Circuit de compensation de phase selon la revendication 1, dans lequel le microcontrôleur (34) est en outre configuré pour délivrer au niveau du panneau avant une ou plusieurs parmi une indication du remplacement par la phase de secours, une consommation d'énergie, et une marge entre la consommation d'énergie et un niveau maximal/sécuritaire préétabli.

10. Circuit de compensation de phase selon la revendication, comprenant en outre un détecteur de défaillance du neutre (206) pour empêcher un dommage dû à un neutre perdu, dans le cas d'une détection de défaillance du neutre, le microcontrôleur débranche les phases.

11. Méthode pour détecter et compenser la perte d'une phase d'un bloc d'alimentation triphasé, comprenant :
la fourniture d'une unité de détection (30) configurée pour mesurer les niveaux de courant et de tension de chaque phase du bloc d'alimentation triphasé ;
la fourniture d'une unité de commutation (32) ayant trois relais primaires, chaque relais primaire étant normalement fermé pour connecter une phase respective du bloc d'alimentation triphasé à une ligne de charge de sortie, et trois relais de secours, chaque relais de secours étant normalement ouvert et, lorsqu'il est fermé, formant une connexion entre deux lignes de charge de sortie ; et
la fourniture d'un microcontrôleur (34), configuré pour recevoir des mesures provenant de l'unité de détection, pour déterminer, à partir des mesures, une phase perdue et une phase restante, et en réponse, pour activer l'unité de commutation pour déconnecter la phase perdue et connecter la phase restante pour fournir une alimentation de secours à la place de la phase perdue ;
dans lequel la détermination de la phase de secours comprend la comparaison des courants électriques fournis par chacune des deux phases restantes et la sélection de la phase de secours en tant que phase moins chargée.
